# EUROPEAN PATENT APPLICATION

(11) **EP 4 221 295 A1**
(43) Date of publication of application: **02.08.2023**
(21) Application number: 22305107.9
(22) Date of filing: 31.01.2022
(51) Int. Cl.: H04W 12/30, H04W 12/084, G06F 21/10, G06F 21/12, G06F 8/60, H04W 88/02

(54) **INJECTION OF CRYPTOGRAPHIC MATERIAL DURING APPLICATION DELIVERY**

(71) Applicant: Thales Dis France SAS, 92190 Meudon (FR)
(72) Inventor: MAUNIER, Gérald, 13705 LA CIOTAT (FR); SCHALLDACH, Thomas, 13705 LA CIOTAT (FR)
(74) Representative: Grevin, Emmanuel

(57) **Abstract**

A method for mobile application instantaneous secure communication is provided. It provides for issuing of application specific cryptographic material for public applications in the platform specific app stores in a secure and trusted manner. The method includes receiving a diversified mobile app (190) injected with cryptographic material (192) by way of an application diversification process according to one of: i) a no delegation mode (300), ii) a partial delegation mode (320), and iii) a full delegation mode (340). Upon completion of said application diversification process, said diversified mobile app (190) uses said cryptographic material (192) to instantaneously establish a secure communication channel (197) for i) out-of-the-box provisioning and secure onboarding with an AppVendor (170) associated with said mobile app binary, or ii) licensing to consume said service from another platform other than that of said AppVendor hosting said mobile app binary. Other embodiments are disclosed.

## Description

### TECHNICAL FIELD

The present invention relates to the technical field of on-line and cloud software delivery. One or more embodiments of the invention relate generally to the field of cryptographic security while delivering software applications in the cloud. More particularly, embodiments relate to a method and system for securely personalizing a delivery of a software app to a mobile device.

It also relates to a new and developed way to cryptographically establish a secure communication channel after downloading a mobile device software application resulting from the on-line software delivery.

More specifically, it envisages a means of establishing a secure channel between a mobile device and a service responsive to a download process whereby an application vendor can personalize and provision the mobile device safely.

Advantageously, the invention provides a technical mechanism for issuing application specific cryptographic material for public applications hosted in platform specific app stores in a secure and trusted manner to guarantee authenticity of a downloaded mobile app.

### BACKGROUND

Mobile application development is the act or process by which a mobile app is developed for mobile devices. Mobile apps can be pre-installed on phones during manufacturing platforms, or delivered as web applications using server-side or client-side processing, or downloaded via app stores on a mobile device. Unlike enterprise software, mobile apps are usually cloud-native, designed for a range of different operating systems, devices, and services, for example, Android and iOS backend micro services. There is often pressure on mobile device software developers to create mobile apps securely and quickly.

Most apps are usually downloaded from an App Store, which itself includes a software application that runs on a mobile device. App Stores provide multiple layers of protection to help ensure that apps are free of known malware and have not been tampered with. Additional protections, sandboxing, and notarizations are means to enforce access rules that mobile apps are given to access user data on the mobile device. These security controls provide a stable, secure platform for apps, and permit for users to access these apps on their devices without fear of viruses, malware, or unauthorized attacks. App stores are the safest place to download apps, but the download activity is also one of the more vulnerable actions, and can expose the user to losing, or unintentionally providing access to, personal data and private information.

Software developers follow recommended steps to secure mobile apps throughout the development and up through the point where they publish their mobile app on an app store, whereby they integrate security assessments into the software development lifecycle, follow established security principles and use solutions with proven efficiency. Software developers typically follow recommended security rules, such as obfuscating code, disabling scripts unless explicitly required, not storing sensitive content in plain text, and not committing any sensitive information to archives, and so on. However, improving the security of mobile apps beyond this is difficult because of the vast number of platforms and operating systems to support currently available.

Certain companies that place high priority on security have further implemented developer programs to hold developers to certain standards to ensure they are distributing safe code. Such programs are a means of ensuring that the app store knows that the code it received from the developers is genuine, and has not been corrupted or tampered with prior to distribution. As one example, the iOS app deployment process provides for a provisioning profile that ties developers and devices to an authorized development team and enables a device to be used for testing and evaluating security concerns. The provisioning file is downloaded from a developer account and embedded in an app bundle, and then the entire code bundle is signed, thereby guaranteeing the developer's identify is authenticated. Other app developer markets are moving to similarly based 'delegated signature mode' where app developer signing key is uploaded (https://developer.android.com/studio/publish/app-signing #enroll ) to the market.

However, problems still persist related to confirming authenticity of a mobile app after the download activity, and from setting up otherwise unsecure communications between the mobile app and a backend server after the app has been downloaded, whereby each instance of the mobile app needs to be individually differentiated and personalized. Mechanisms for establishing a secure communication channel between the mobile app and back-end server are hard to boot-strap and prone to attack. The main problem with the current app store download models is that all users download the same mobile app binary from the app store. And, there is no clear mechanism, developer program or guidelines, that provide means to secure the initial communication exchanges (typically containing onboarding & diversifying data) with the applicative backend once the mobile app is downloaded. The back-end server cannot be sure the mobile app which was downloaded to the mobile device is a genuine app, and not a fake app trying to access the back-end services. There is no "out-of-the-box" solution to help app developers boot-strap a secure communication channel between the actual mobile device running the downloaded mobile app and a back-end service once the app store has completed the download process.

State of the art techniques to initialize a secure communication channel with any single instance of an application are limited to the following, and even where implementable, lead to significant impact on overall security and deployment costs:
- Server side (Transport Layer Security (TLS) only : While protecting the exchanges between the app instance and the app vendor backend, a man in-themiddle (MiTM) attack may compromise the initial flows and find out application instance specific secrets. Also app vendor backend has no guarantee connecting entity is a genuine instance of its legitimate app. The back-end service cannot be sure it's talking to a real mobile application; the mobile app doesn't have certificate yet. This is a simple approach, but does not address all the needs.
- Secret (e.g. symmetric key) embedded in the app binary but common to all instances: proves to the app vendor that a genuine app is willing to register and establish some instance specific secrets to then become more secure. Drawback in this model is that the initial binary contained secret is visible to any skilled attacker without difficulty and without possible countermeasure. Fake app instances may then connect to app vendor backend with variable impacts, or attacker may intercept other genuine applications' registration flows and find out their diversified secrets.

- User delegated trust: a valid user will have to inject in the app some parameters that may be derived to establish a common secret between app instance and backend. Drawback is that user must already be registered out of band and entered data must be previously known by the app vendor (UIN, registration code, etc.). This doesn't allow remote onboarding use cases where user is not yet known or has no other communication means.
- Other approaches would probably not rely on the app store, and instead propose, or imply, some changes on the application distribution model and client, for example, by way of device attestation being pushed by client to the app vendor for them to wrap further secrets but lack of standard and multiplicity of device vendors don't really allow this model to scale.

In view of the limitations above, the invention herein provides an elegant solution that overcomes existing problems and advantageously ensures the very first message can already be secured between the mobile device and the back-end service, after the app store distributes the app and immediately after the user downloads the app, all without developer effort in between.

### SUMMARY

Provided herein is a method and system for mobile application instantaneous secure communications. It leverages a secure bootstrap mechanism offered by such app stores, whereby app developers do not have to handle this mechanism on their own when app is already distributed and they have no reliable root of trust, and back-end services and developers are assured a genuine app is connecting to their back-end services.

In a first embodiment, a method for mobile application instantaneous secure communication is provided, for example, implemented by an App Store. The method includes the steps of receiving a request to host a mobile app binary, receiving a provisioning profile indicating a delegation mode for diversification of said mobile app binary and injecting cryptographic material during an application diversification process of said mobile app binary according to the delegation mode, responsive to a downloading of the mobile app binary, whereby a diversified mobile app is produced. Upon completion of the application delivery and diversification process, the diversified mobile app uses the cryptographic material to differentiate an instance of the mobile app binary to a backend server, or accessed service, after the downloading, and instantaneously establish a secure communication channel to the backend server or accessed service. The backend server or accessed service can be a service requiring a proof of possession of said crypto material that grants access of the diversified mobile app binary to the service. The diversified mobile app provides for both out-of-the-box provisioning and secure onboarding with an AppVendor and, licensing to consume the service from another platform other than the AppVendor.

In a second embodiment, a method for mobile application instantaneous secure communication is provided, for example, implemented by an App Vendor. The method includes notifying an AppStore of a mobile app binary hosted thereon, and providing a provisioning profile that includes provisioning info according to a delegation mode for app diversification. The profile provides instructions for injecting cryptographic material during an application delivery process of the mobile app binary according to the delegation mode responsive to a downloading of the mobile app binary, whereby a diversified mobile app is produced. Upon completion of the application delivery process, the diversified mobile app uses the cryptographic material to differentiate an instance of the mobile app binary to a backend server, or accessed service, after said downloading, and instantaneously establish a secure communication channel to the backend server or accessed service. The delegation mode is one of: i) a no delegation mode, ii) a partial delegation mode, and iii) a full delegation mode.

In another embodiment a mobile device for mobile application instantaneous secure communication performs method steps responsive to a request for downloading a mobile app binary, for, receiving a diversified mobile app injected with cryptographic material by way of an application delivery and diversification process according to one of: i) a no delegation mode , ii) a partial delegation mode, and iii) a full delegation mode, wherein upon completion of said application delivery process, said diversified mobile app uses said cryptographic material to instantaneously establish a secure communication channel or i) out-of-the-box provisioning and secure onboarding with an AppVendor that created said mobile app binary, or ii) licensing to consume the service from another platform other than that of the AppVendor hosting the mobile app binary.

Other embodiments are contemplated, whereby the methods are extended with several delegation modes for provisioning (full, partial, none) to private / corporate app stores, windows & games distribution platforms, car app store, and also for use with symmetric or asymmetric cryptography, and with additional crypto material encryption services.

### BRIEF DESCRIPTION OF THE DRAWINGS

The features of the present invention, which are believed to be novel, are set forth with particularity in the appended claims. The invention, together with further objects and advantages thereof, may best be understood by reference to the following description, taken in conjunction with the accompanying drawings, in the several figures of which like reference numerals identify like elements, and in which:
**FIG. 1A** depicts a use-case diagram for injection of cryptographic material during an application delivery process of a mobile app to a mobile device and thereafter establishing a secure communication channel using the cryptographic material between the mobile device and a back-end service in accordance with an embodiment;
**FIG. 1B** illustrates preparation steps for a "no" delegation mode and a "partial" delegation mode by way of a provisioning profile in accordance with an embodiment;
**FIG. 2A** illustrates a mobile app binary in accordance with an embodiment;
**FIG. 2B** illustrates a provisioning profile in accordance with an embodiment;
**FIG. 3** illustrates a "No" delegation mode flow chart in accordance with an embodiment;
**FIG. 4** illustrates a "Partial" delegation mode flow chart in accordance with an embodiment;
**FIG. 5** illustrates a "Full" delegation mode flow chart in accordance with an embodiment;
**FIG. 6A** illustrates a diversification process, including for example, delegation mode instructions in accordance with an embodiment;
**FIG. 6B** illustrates a diversified app in accordance with an embodiment;
**FIG. 7** depicts an exemplary diagrammatic representation of a machine suitable for use to perform the methods in accordance with an embodiment; and

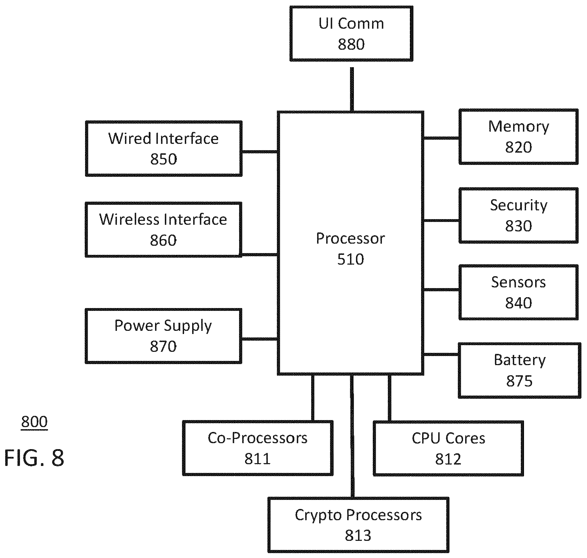

**FIG 8** illustrates a hardware platform suitable for use to perform the methods in accordance with an embodiment

### DETAILED DESCRIPTION

While the specification concludes with claims defining the features of the invention that are regarded as novel, it is believed that the invention will be better understood from a consideration of the following description in conjunction with the drawing figures.

In a typical use-case, an application (app) vendor wants to be able to securely exchange messages between a newly installed instance of their mobile device app and a backend service on the first day of use, right after the application has been downloaded. That means relying on cryptographic materials available 'out of the box' to the mobile device app, to uniquely identify and authenticate this instance and create an e2e encrypted communication channel before exchanging sensitive applicative data. To establish this secure channel using the existing (weak security model) technology and markets model, app vendors may rely on the security of server-only TLS and request or register cryptographic material during an app initialization phase, and/or rely on a vendor secret hardcoded in the published app binary, and therefore shared and potentially exposed secret to initialize the secure channel.

The invention described herein provides for issuing application specific cryptographic material for public applications in the platform specific app stores in a secure and trusted manner. It is advantageous, in that it replaces the existing weak security models mentioned in the typical use-case above with an out of the box experience, following best practices and better keeping control of the crypto material as soon as the application download starts. Delegation modes are also provided for fully or partially delegated models for app vendors not able or not willing to invest in their own cryptographic provisioning system.

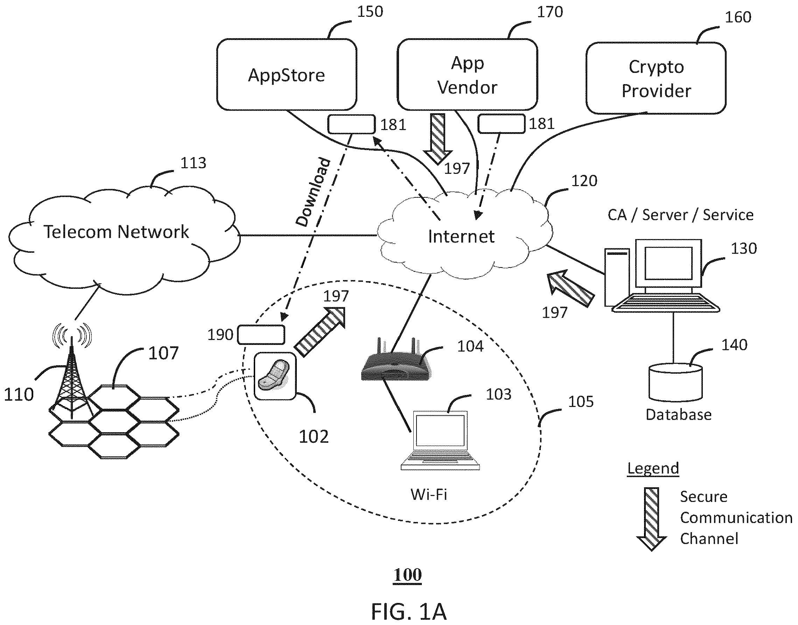

**FIG. 1A** depicts a use-case environment for injection of diversified cryptographic material during an application delivery process of a mobile app **190** downloaded to a mobile device **102** from an AppStore **150.** The application delivery and corresponding diversification process allows thereafter for the immediate establishment of a secure communication channel **197** between the mobile device **102** and a back-end service using the cryptographic material inserted into the mobile app **190** during the downloaded process. The back-end service to the mobile device **102** over the established secure communication channel **197** can be provided by way of Server/Service **130,** the AppVendor **170** and/or other cloud service providers, alone, or in combination. The back-end service can be any application or service requiring a secure exchange, for example, but not limited to, digital wallets, crypto currency applications, mobile banking apps, social networking apps, or other mobile crypto apps. The secure communication channel **197** is established immediately after the mobile app download process completes and does not require any further involvement or oversight.

The inventive methods by which the mobile app binary **181** is diversified to produce the diversified mobile app **190** during the download and delivery process brings a simple, scalable, innovative and secure solution to enable complex cryptographic operations out of the box (end to end encryption, digital signatures and means to do a secure onboarding throughout the whole application lifecycle). It enables app vendors to focus on their applicative logic & business instead of dealing with current incomplete app distribution ecosystem. It's use case is applicable for IP licensing for app stores willing to offer the secure bootstrap feature, and for selling to crypto provider platforms or services to app developers creating the mobile app binary **181.** The inventive components and methods can leverage existing Public Key Infrastructure (PKI), asymmetric and/or symmetric cryptography, digital signatures, end to end encryption. Injected secret materials may also be further encrypted by an application hard coded secret to avoid someone in the middle to simply see them on the line. It applies to mobile devices with Apple^{®} Store, Google^{®} Play Store, Samsung^{®} App Store but also for enterprise app stores, windows app store, game distribution systems (Steam/Uplay/...) and other device application distribution platforms for cars / consoles etc.

Advantages:
- Enables instant secure communication right after download from market
- Allows backend to detect fake mobile applications
- Improves security of existing mechanisms built from the ground and exposed to attacks
- Simplifies app developer efforts to build the secure communication
- Simplifies backend key management efforts
- No change in apps or mobile devices is needed

The cryptographic material is injected/inserted into the mobile app **190** as part of the delivery process responsive to a user request to download the mobile app 190. The cryptographic material is diversified according to one of three delegation modes, each identifying a tier of provider delegation responsibilities:
- Fully Delegated - Where AppStore 150 becomes the cryptographic provider; suitable for small businesses. In this mode, the AppStore 150 handles all the secrets generation, key management and lifecycle activities. The crypto responsibilities are fully delegated to the AppStore 150 to supply the crypto material and root secrets.
- Partially delegated - Where AppStore 150 requests data from an external Crypto Provider 160; suitable for medium businesses. In this mode, the AppStore 150 relies to some degree on a 3^{rd} party crypto provider for establishing a chain of trust, whether it be the CryptoProvider 160 or endorsement by AppVendor 170. The crypto responsibilities are partially delegated to the AppStore 150, for example, to register crypto provider endpoint, generate keys for the diversified app and control certificate issuance from crypto provider (signing of a CSR).
- Not delegated - Where AppStore 150 requests all cryptographic data from external Crypto Provider 160 as specified by AppVendor 170 in the provisioning profile, and AppVendor 170 becomes the cryptographic provider - suitable for large businesses. No crypto responsibilities are delegated to the AppStore 150. The AppVendor 170 controls the full cycle ( they selects their preferred/trusted crypto provider to insert secrets on demand), and registers the crypto provider endoint). The role of crypto provider may be endorsed by AppVendor, but the roles of Crypto Provider 160 and AppVendor 170 are separate for clarity. The AppStore would not get in touch with AppVendor role after initial provisioning phase.

The term "delegation mode" is referenced from the viewpoint of the developer or mobile app creator. For example, when an app developer fully delegates the crypto responsibilities for the AppStore 150, the AppVendor 170 doesn't need to include functionality in the mobile app or deploy any additional service for these responsibilities. Rather, the AppStore 150 is required to do everything; the responsibility has been fully delegated. So, in a fully delegated mode, the AppStore 150 is completely responsible for crypto provisioning. In contrast, in a no, or none, delegation mode (same), the AppVendor 170 requires the AppStore 150 to fetch those crypto materials from elsewhere, because appVendor wants to keep control over the cryptographic material generation by contracting or deploying itself a crypto provider. So, where the AppStore 150 would be usually required to contact the AppVendor 170, the AppVendor 170 can instead manage the delegation of crypto responsibilities--the secrets generation and the crypto/code life-cycle-by way of the inventive methods described herein, for instance, by way of a provisioning profile explained ahead. A partial delegation mode assigns certain crypto responsibilities to AppStore 150, and allows the AppStore to delegate certain crypto activities to 3^{rd} party cryptographic provider services. In the "no" delegation mode, the AppStore 150 is required to contact the AppVendor 170 selected crypto provider to obtain crypto material. The crypto provider, upon contact from the AppStore 150, would handle the responsibilities for injecting the cryptographic material, and thus wouldn't require the AppStore 150 for any kind of crypto or key management.

One of the problems today, is that when the AppVendor 170 places a mobile app 181 on the market, the first thing needed is to onboard the user, which can require the exchange/sharing of private information, for example, a picture, a identification card, or personal information (e.g., age, occupation, etc.). This applies whether the subscription app model is free or paid; the information needs to be protected. However, current download models try to build trust on weak foundations. Moreover, there is interest in securing communications that cross service disciplines, for example, to ensure that a user that downloaded and paid for a media streaming app that was developed by an App Vendor 170 but used to consume a service provided by another service 130. In these cases, the App Vendor wants to ensure that the user that downloaded the app has the proper credentials, or secrets, required by the service to consume the service at the instant the app is downloaded. Whether it is to consume a service, multiple services, or stream from various devices, it is necessary to establish an out-of-the-box secure connection, which can prove the user bought the app, and that the app is genuine. This can be achieved by the inventive methods described herein.

Still referring to **FIG. 1A****,** the AppVendor **170** creates, or provides, for sale or distribution, the mobile app binary **181,** for example, but not limited to, a digital wallet app. The AppVendor **170** provides the mobile app binary **181** to the AppStore **150** that hosts it, and allows users to shop and download mobile apps such as this one. Once a user decides to download the mobile app binary **181,** the AppStore will follow a certain process for diversification of the mobile app binary **181** which results in a diversified mobile app **190** that is downloaded to the user's mobile device **102.** The manner by which the AppStore **150** then proceeds to diversify the app, and the means by which it collects and injects cryptographic material into the mobile app binary **181,** is called the application diversification process and depends on the delegation mode (e.g., full, partial, none). Once the diversified mobile app **190** has been downloaded to the mobile device **102,** it can immediately establish a secure communication channel **197** between itself and the back-end service using the cryptographic material inserted into the mobile app **190** during the downloaded process.

The communication environment **100** for first and subsequent secure access to a service 130 is shown in **FIG. 1A****.** The communication environment **100** can include a telecommunication network **113** and an internet communication network (Internet) **120.** The telecommunication network **113** can provide a mobile communication link via base receiver **110** for wireless connectivity of a mobile device **102** from one or more cells **107.** In one arrangement, the mobile device **102** can communicate over a Radio Frequency (RF) link with the base receiver **110** using a standard communication protocol such as legacy 2G (CDMA, GSM) and 3G, or LTE 4G and 5G. The base receiver **110,** in turn, can connect the mobile device **102** to the Internet **120** over a packet switched link. The internet can support application services and application service layers **150** for providing media or content to the mobile device **102.** By way of the communication environment **100,** the mobile device **102** can establish connections with a server/service **130** on the network and with other mobile devices for exchanging information or providing services such as audio, text messaging, gaming, media, audio, video, movies, films, social interaction applications, and the like. The server **130** can have access to a database **140** that is stored locally or remotely and which can contain profile data. The server can also host application services directly, or over the Internet **120.**

The mobile device **102** can also connect to the Internet over a Wi-Fi or WLAN 105. Wireless Local Access Networks (WLANs) provide wireless access to the mobile communication environment within a local geographical area. WLANs can also complement loading on a cellular system, so as to increase capacity. Wi-Fi is the wireless technology used to connect computers, tablets, smartphones and other devices to the internet. Wi-Fi is the radio signal sent from a wireless router to a nearby device, which translates the signal into data for the user of the mobile device **102.** Wi-Fi is a family of wireless network protocols, based on the IEEE 802.11 family of standards, which are commonly used for local area networking of devices. WLANs are typically composed of a cluster of Access Points (APs) **104** also known as base stations. The mobile communication device **102** can communicate with other WLAN stations such as a laptop **103** within the base station area **105.** In typical WLAN implementations, the physical layer uses a variety of technologies such as IEEE 802.11 technologies. The physical layer may use infrared, frequency hopping spread spectrum in the 2.4 GHz or 5GHz Band, or sequence spread spectrum. The mobile device **102** can send and receive data to the server **130** or other remote servers on the mobile communication environment. In one example, the mobile device **102** can send and receive audio, video, or other multimedia content from the database **140** through the server **130.**

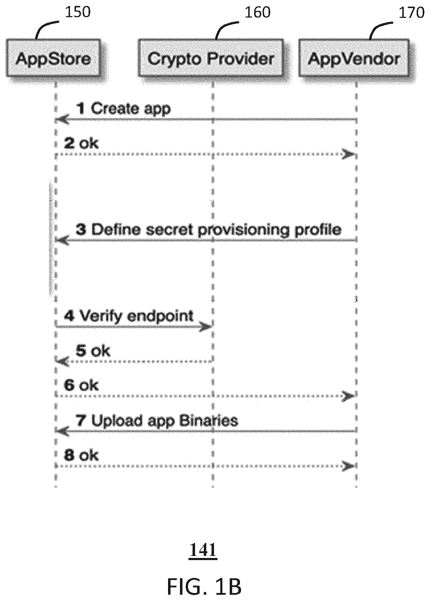

**FIG. 1B** illustrates preparation steps 141 for a "no" delegation mode and a "partial" delegation mode by way of the provisioning profile in accordance with an embodiment. Instances will be delivered from the same binary not yet diversified when uploaded to appstore, which happens only once.

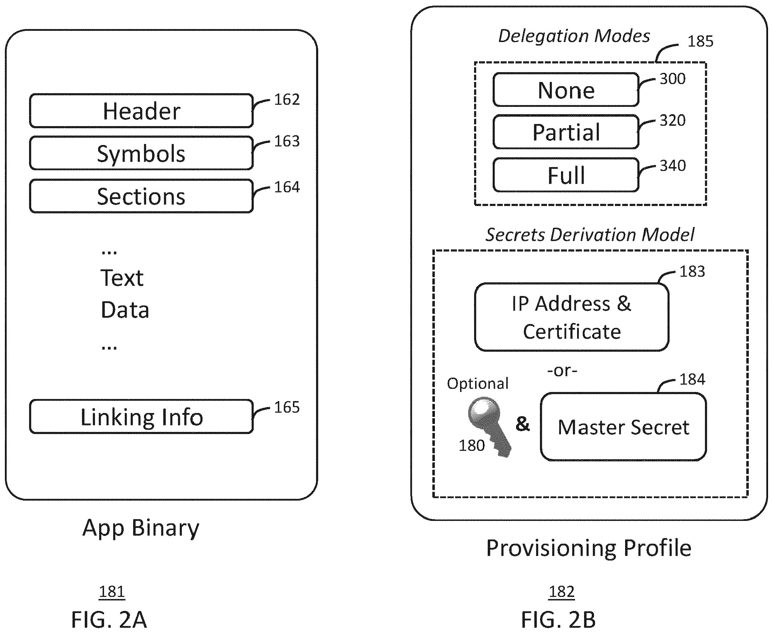

At **step 1,** the AppVendor **170** registers the mobile app **181** on the AppStore **150,** to which a response is provided at **step 2.** at **step 3,** the AppVendor **170** defines and provides to the AppStore **150** a provisioning profile. The provisioning profile provides instructive information to the AppStore **150** for diversifying the mobile app binary **181** to produce the diversified mobile app **190.** After AppStore verified crypto provider availability and confirmed provisioning profile understanding, AppVendor makes available the mobile binary app 181 (note further updates of the binary 181 are possible without necessarily going through steps 1-6). Briefly referring to **FIG 2A****,** an exemplary mobile app binary **181** is shown in accordance with an embodiment. The binary may be static or dynamic, depending on its compilation and build instructions. But, in general, a binary file, follows a format, for example, an executable and linkable format, which allows for a central processing unit (CPU) of a computer or mobile device to execute and run the binary. As illustrated, the binary file will include a header section **162,** a symbols section **163,** other sections **164** (e.g. text, data, etc.) and linking information **165.** These sections constitute the mobile app binary **181** for execution on a CPU.

Briefly, **FIG. 2B** illustrates a provisioning profile **182** in accordance with an embodiment. It includes a secrets derivation model that is one of i) an IP Address & Certificate **183,** or ii) a Master Secret; the indication of i or ii, depending on the delegation mode **185** (e.g. none-300, partial-320, or full-320). That is, the secrets derivation model corresponds to a delegation mode, comprising one of: i) an Internet Protocol (IP) address and server certificate (183) for said no delegation mode and said partial delegation mode, and ii) a master secret (184) with an optional wrapping key (180) for said full delegation mode.

When the secrets derivation model is directed to using a Master Secret **184,** the provisioning profile **182** includes an optional provisioning profile key 180. The AppStore **150** uses this key **180** to encrypt content in the diversified mobile binary app 190. Key 180 is optional and may be used by AppStore 150 to wrap diversified key in partial delegated mode (half-delegated) as well. Briefly, referring back to **FIG. 2A****,** hackers familiar with binary file formats can examine the mobile binary file 190 for cryptographic material (or compare it directly byte by byte to other binary files without such a secret or with a different secret), which can then be parsed to find the secret. Accordingly, injecting a secret directly into a mobile binary app **181** does not provide sufficient or adequate protections. By comparing two instances of the app, a hacker can easily find where is the secret, and if it is in clear, they can extract it. That means it would be easy to attack and find the secret inside an instance of the app. So, it's already a 2nd or 3rd level attack but still, it's advantageous to encrypt this secret. Thus, the optional key **180** allows for an additional layer of encryption that overcomes such a security concern.

Returning back to **FIG. 1B****,** at **step 4,** the AppStore **150** verifies the cryptographic endpoint identified in the provisioning profile 182 if the delegation mode is not "full delegation 340". This endpoint should be verified and registered by the app store before the application binaries can be uploaded and listed for delivery. The endpoint is either the CryptoProvider **160** or the AppVendor **170** endorsing this role. During the application delivery process the registered endpoint will be queried to provision the cryptographic material needed for the injection. The generation of cryptographic material can be delegated to the most suitable entity based on the size or needs of an AppVendor 170.

The indication of the delegation mode is determined by the secrets derivation model in the provisioning profile **182;** namely, whether the i) IP Address & Certificate **183** is presented therein, or the ii) Master Secret **184** is presented therein. In a preferred embodiment, the delegation mode **185** is not expressly indicated, although other embodiments of the provisioning profile 182 could include an identifier indicating the delegation mode. Continuing on, for example, in a "no-delegation" mode, the AppStore **150** would verify CryptoProvider **160** as the cryptographic endpoint during this preparation phase using the IP Address & Certificate **183.** Similarly, the AppStore **150** would verify the CryptoProvider **160** in a "partial delegation mode". At **step 5,** the CryptoProvider 160 is verified, and the AppStore 150 provides an OK at **step 6,** and informs the AppVendor170 to upload the mobile app binary 181 at **step 7,** to which it responds by uploading to the store.

The AppStore 150 responds with an OK at **step 8,** and then hosts the mobile app binary 181. It keeps store of the associated provisioning profile **182.** In one embodiment, the provisioning profile 182 is kept separate from the mobile app binary **181.** In other embodiments, it could be contemplated that the files are associated together in a single archive. The preparation steps for the "no" delegation mode and the "partial" delegation mode by way of the provisioning profile 182 are finished with completion of **step 8.** To recap, the preparation steps shown in **FIG 1B** for no delegation mode and partial delegation mode include steps of verifying a cryptographic endpoint (187) identified by said delegation mode (185) using said IP address and server certificate (183); and if successful, notifying said AppVendor (170) to upload said mobile binary app (181) to said AppStore (150). Thereafter, the delegation mode (185) is associated with said mobile app binary (181) hosted on said AppStore (150), wherein said associating thereby commits AppStore to perform said application diversification process in accordance with said delegation mode (185).

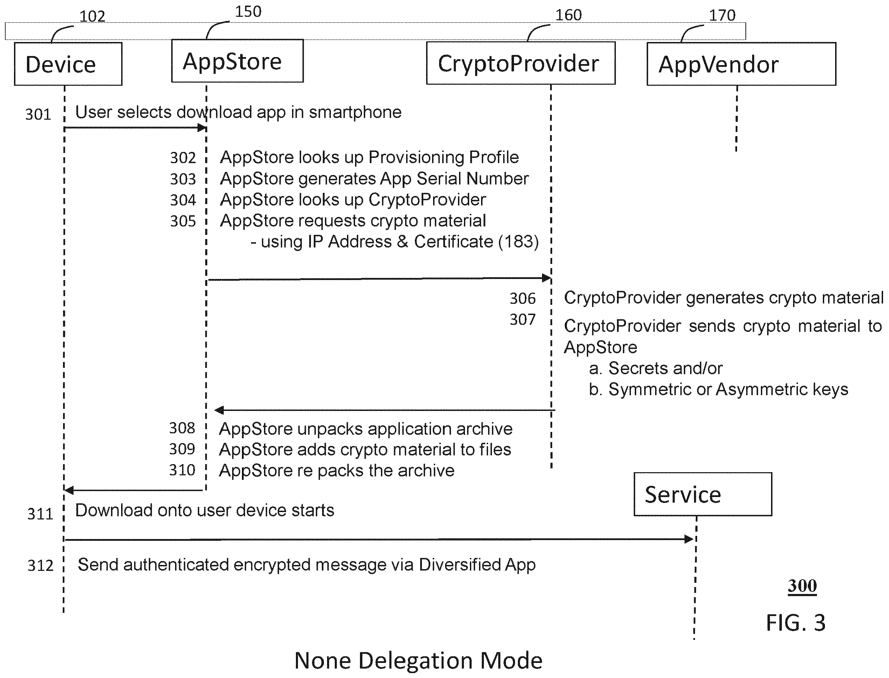

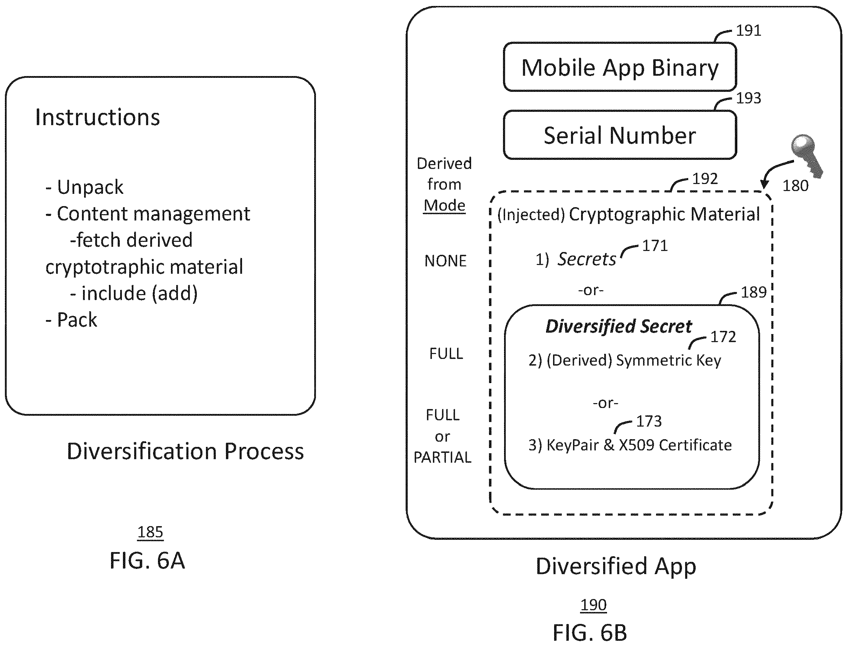

Briefly, **FIGS. 3-4** described ahead each illustrate an embodiment of a method for mobile application instantaneous secure communication. The method differs according to the delegation mode identified in the provisioning profile 182 (e.g. none-300, partial-320, or full-340. Reference will also be made to **FIGS 6A** and **6B** when describing the method steps. Briefly, **FIG. 6A** illustrates an application diversification process including exemplary instructions common to methods 300, 320 and 340. **FIG. 6B** illustrates the mobile diversified app 190 that is generated by way of methods (300, 320, 340) in accordance with respective embodiments.

The method for mobile application instantaneous secure communication is implemented in practice by way of the aforementioned components (e.g. AppStore **150,** AppVendor **170,** CryptoProvider **160,** mobile device **(102)** in the communication environment **100.** The methods include steps of receiving a request to host the mobile app binary (181); receiving a provisioning profile (182) indicating a delegation mode for diversification of said mobile app binary (181); and injecting cryptographic material during an application diversification process of said mobile app binary (181) according to the delegation mode whereby the diversified mobile app (190) is produced responsive to a downloading of the mobile app binary (181). The step of injecting that is common to the methods described ahead is performed responsive to a deriving step, whereby cryptographic material (192) is derived according to said delegation mode, and is one of: i) a secret (171) for no delegation mode, ii) a derived symmetric key (172) for full delegation mode, and iii) a keypair with accompanying certificate (173) for either partial delegation mode or full delegation mode.

Upon completion of said application diversification process, said diversified mobile app (190) uses said cryptographic material to differentiate an instance of said mobile app binary to a backend server, or accessed service, after said downloading, and instantaneously establish a secure communication channel (197) to said backend server or accessed service. Upon establishing said secure communication channel (197) the diversified mobile app (190) provides for either of i) out-of-the-box provisioning and secure onboarding with an AppVendor (170), and ii) licensing to consume said service from another platform other than said AppVendor, wherein said backend server or accessed service is a service requiring a proof of possession of said crypto material (192) that grants access of the diversified mobile app (190) to said service.

**FIG. 3** illustrates a "No" or "none" delegation mode flow chart in accordance with an embodiment. The method **300** of the flow-chart for this delegation mode may be practiced with more or less than the number of steps shown, and is not limited to only those steps shown. In this mode, the AppStore 150 does not have the inherent capabilities to provide crypto provisioning and/or services. The AppStore 150 does not know, or need to know, the cryptographic material to be inserted into the diversified mobile app 190. Non-delegated means the app creator/developer managed the crypto material insertion responsibilities, and merely expect the app store/market to contact a crypto provider everytime an application is downloaded, who can the prepare and diversify crypto material (e.g. secrets, keys, etc.), and the AppStore doesn't need to know what it is.

The method 300 starts at step **301** when the mobile device 102 receives a user request to download the mobile app binary 181 from the AppStore 150. At step **302,** the AppStore 150 checks the Provisioning Profile 182, and generates an App Serial Number at step **303.** At step **304,** the AppStore 150 looks up the CryptoProvider in the Provisioning Profile 182, and requests crypto material at step **305** using the IP Address & Certificate (183) from the Provisioning Profile 182. Upon request from the AppStore 150, the CryptoProvider 160 at step **306** generates the cryptographic material and sends it to the AppStore 150 at step **307.** In this delegation mode, the cryptographic material is either one of a secret and/or a key (symmetric or asymmetric). The market for the app store here is completely transparent; the AppStore 150 knows it needs crypto material but doesn't know how, so it contacts the entity identified by the IP address and certificate 183 in the provisioning profile 182. The crypto material (also "secret" for this mode) can be a public key, a symmetric key, a certificate, a complex license file, or any other secret.

At step **308,** the AppStore 150 unpacks the application archive associated with the mobile app binary 181. An application archive contains various files and directories, for example, a meta directory, a manifest, one or more certificates, a library, class files, resources and so on. The AppStore adds the cryptographic material to the files in the application archive at step **309,** and then re-packs the archive at step **310,** which now represents the diversified mobile app binary 190. Briefly, referring to **FIG. 6B** the diversified mobile app binary 190 includes the mobile app binary 181, the unique serial number 193, and the injected cryptographic material, which corresponds to Secrets 171 for the "none" delegation mode. At step **311,** the mobile device downloads the diversified mobile app 190 prepared by the AppStore and once installed on the mobile device 102, it sends right from first start an authenticated message to the back-end service via the diversified mobile app 190 at step **312.**

As seen in **FIG. 6A****,** instructions for unpacking, adding content, and re-packing the archive for this delegation mode are provided. As noted above, responsive to receiving a request for downloading said mobile app binary (181) hosted on AppStore (150), the method includes unpacking (308) an application archive associated with said mobile app binary (181) ; adding (309) cryptographic material (192) according to said delegation mode within said application archive; packing (310) said application archive to produce said diversified mobile app (190); and resuming said downloading (311) of said diversified mobile app (190), wherein said steps of unpacking, adding, and packing correspond to said step of injecting.

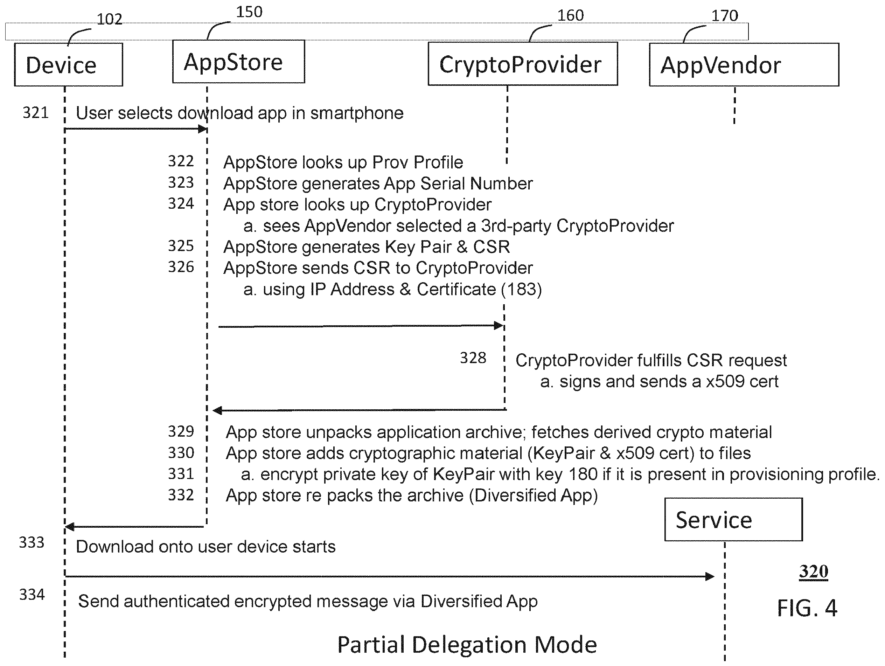

**FIG. 4** illustrates a "Partial" delegation mode flow chart in accordance with an embodiment. The method **320** of the flow-chart for this delegation mode may be practiced with more or less than the number of steps shown, and is not limited to only those steps shown. In this mode, the AppStore 150 can be trusted to generate some crypto material because it is faster for it to do so, then outsource the responsibility to 'authorize' and keep track of the newly diversified application instance by e.g. issuing a matching certificate. It avoids coordinate a secret exchange between two disparate systems. Communication over the internet (e.g. via TLS/SSL, HTTPS) is safer than a coordinated exchange, but still requires a trusted 3^{rd} party to sign the credential for establishing a chain of trust and a root anchor.

The method 320 starts at step **321** when the mobile device 102 receives a user request to download the mobile app binary 181 from the AppStore 150. At step **322,** the AppStore 150 checks the Provisioning Profile 182, and generates an App Serial Number at step **323.** At step **324,** the AppStore 150 looks up the CryptoProvider in the Provisioning Profile 182 and sees that the AppVendor 170 selected a 3rd-party CryptoProvider. In this delegation mode, the AppStore 150 generates a Key Pair & Certificate Signing Request (CSR) at step 325, and then sends the CSR to the CryptoProvider using the IP address and certificate (183) in the provisioning profile 182.

At step **328,** the CryptoProvider 160 fulfills the CSR request by signing and sending a certificate back to the AppStore 150. Even if the AppVendor 170 is not the actual crypto provider, this aspect of delegating crypto responsibility remains with the AppVendor 170 by way of the provisioning profile because it provided the IP address and certificate (183). A CSR is a Certificate Signing Request, and is a block of encoded text that is given to a Certificate Authority (CA) when applying for a Certificate. It is usually generated on a server (e.g. server 130 in FIG. 1A) where the certificate will be installed and contains information that will be included in the certificate such as the organization name, common name (domain name), locality, and country. The CSR also contains the public key that will be included in the resulting certificate. The AppStore temporarily holds onto the private key, but provided the public key of the keypair in the CSR and serial number as common name.

Although step 328 refers to a "x509" certificate, which is commonly used,, in practice, it can be any other type of certificate. The x509 designation in step 328 was given merely to distinguish it from the "Certificate" shown at step 329. X.509 is a standard defining the format of public-key certificates. X.509 certificates are used in many Internet protocols, including TLS/SSL, which is the basis for HTTPS, the secure protocol for browsing the web. They are also used in offline applications, like electronic signatures. X.509 also defines certificate revocation lists, which are a means to distribute information about certificates that have been deemed invalid by a signing authority, as well as a certification path validation algorithm, which allows for certificates to be signed by intermediate CA certificates, which are, in turn, signed by other certificates, eventually reaching a trust anchor.

At step **329,** the AppStore 150 unpacks the application archive associated with the mobile app binary 181. As seen in **FIG. 6A****,** a diversification processs that includes exemplary instructions for unpacking, fetching, adding, and re-packing the archive for this delegation mode are provided. The derived cryptographic material is fetched and added to the archive. The AppStore adds the cryptographic material to the files in the application archive at step **330.** The cryptographic material added to the archive consists of the KeyPair (public key and private key) and the x509 certificate. Briefly, referring to **FIG. 6B** the diversified mobile app binary 190 includes the mobile app binary 181, the unique serial number 193, and the injected cryptographic material, which corresponds to the KeyPair & x509 Certificate 173 for the "Partial" delegation mode. At step **331,** the AppStore 150 checks to see if the provisioning profile key 180 is present, and if so, it encrypts the private key of the KeyPair with it. The AppStore 150 then re-packs the archive at step **332,** which now represents the diversified mobile app binary 190. At step **333,** the mobile device downloads the diversified mobile app 190 prepared by the AppStore and once installed on the mobile device 102, right from first start it sends an authenticated message to the back-end service via the diversified mobile app 190 at step **334.**

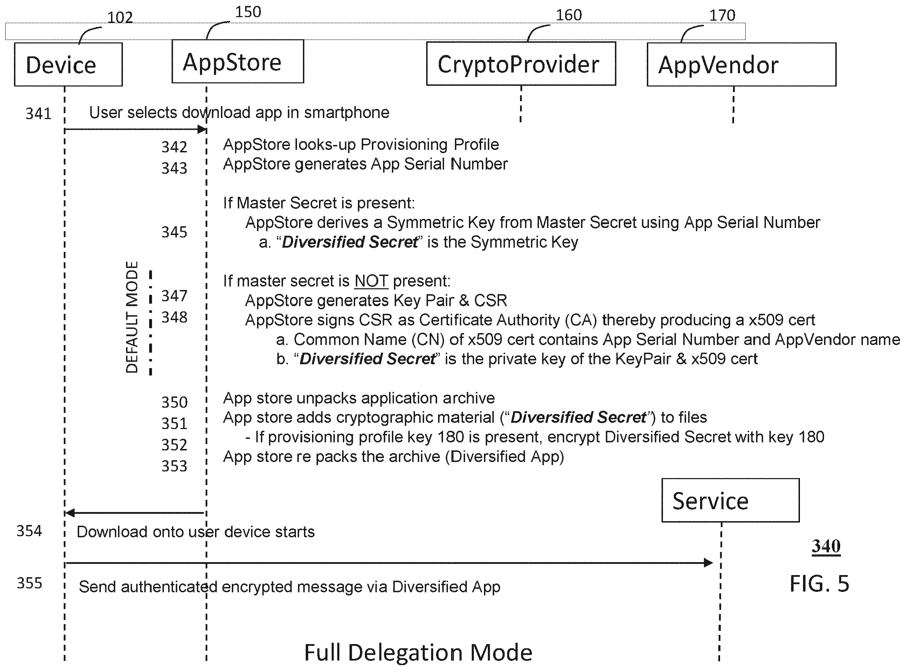

**FIG. 5** illustrates a "Full" delegation mode flow chart in accordance with an embodiment. The method **340** of the flow-chart for this delegation mode may be practiced with more or less than the number of steps shown, and is not limited to only those steps shown. The default mode for "full" delegation mode is to use the certificate model (generate keypair & CSR, and CA to sign), which is determined by inspecting the secrets derivation model in the provisioning profile 182 (see FIG. 2B). So, unless there is a Master Secret 184 present, the IP Address & Certificate 183 will be used for the default certifcate model. The Master Secret 184 insertion is an option available to the app developer at the time of the creation of the mobile app binary who wants to do more than leverage the default certificate model. For example, it may be more interesting to have a master secret derived from serial number to generate symmetric keys.

The method 340 starts at step **341** when the mobile device 102 receives a user request to download the mobile app binary 181 from the AppStore 150. At step **342,** the AppStore 150 checks the Provisioning Profile 182, and generates an App Serial Number at step **343.** This is needed in this mode because when the AppStore does the derivation, it needs to derive the master key from something like an identifier, or inject it as common name of the certificate. If it finds a Master Secret is present in the Provisioning Profile 182, the AppStore derives a Symmetric Key from Master Secret using App Serial Number at step **345.** The ***"Diversified Secret'*** is this Symmetric Key. If it does not find a Master Secret present in the Provisioning Profile 182, it proceeds to generate a Key Pair (public key and private key) & CSR at step **347.** At step **348,** the AppStore signs the CSR, acting as the Certificate Authority (CA), thereby producing a x509 certificate. The Common Name (CN) of x509 cert contains App Serial Number and AppVendor name, and the "Diversified Secret" becomes the private key of the KeyPair & x509 cert.

At step **350,** the AppStore 150 unpacks the application archive associated with the mobile app binary 181. As seen in **FIG. 6A****,** instructions for unpacking, adding content, and re-packing the archive for this delegation mode are provided. The AppStore adds the cryptographic material to the files in the application archive at step **351.** The cryptographic material added to the archive consists of the "Diversified Secret". At step **352,** the AppStore 150 checks to see if the provisioning profile key 180 is present, and if so, it encrypts the "Diversified Secret" with it. The AppStore 150 then re-packs the archive at step **353,** which now represents the diversified mobile app binary 190. Briefly, referring to **FIG. 6B** the diversified mobile app binary 190 includes the mobile app binary 181, the unique serial number 193, and the injected cryptographic material, which corresponds to the (Derived) Symmetric Key 172 or the generated keypair and certificate 173 for the "Full" delegation mode. At step **354,** the mobile device downloads the diversified mobile app 190 prepared by the AppStore and once installed on the mobile device 102, right from first start it sends an authenticated message to the back-end service via the diversified mobile app 190 at step **355.**

### Other Embodiments

In another embodiment, a method for mobile application instantaneous secure communication is provided, for example, practiced by the AppVendor 170. The method includes the steps of notifying an AppStore (150) of a mobile app binary (181) hosted thereon, and providing a provisioning file (182) that includes provisioning info according to a delegation mode (185) for app diversification. The provisioning profile provides instructions for injecting cryptographic material (192) during an application diversification process of said mobile app binary according to the delegation mode (185) responsive to a downloading of the mobile app binary (181), whereby a diversified mobile app is produced. Upon completion of said application diversification process, said diversified mobile app (190) uses said cryptographic material (192) to differentiate an instance of said mobile app binary to a backend server, or accessed service, after said downloading, and instantaneously establish a secure communication channel (197) to said backend server or accessed service. The delegation mode (185) is one of: i) a no delegation mode (300), ii) a partial delegation mode (320), and iii) a full delegation mode (340).

Upon establishing said secure communication channel (197), the diversified mobile app provides i) out-of-the-box provisioning and secure onboarding with an AppVendor (170) providing said mobile app binary (181), or ii) licensing to consume said service from another platform other than that of said AppVendor. The backend server or accessed service can be any service requiring a proof of possession of said crypto material (192) that grants access of the diversified mobile app (190) to said service. For no delegation mode and said partial delegation mode, the method includes verifying a cryptographic endpoint (187) for providing said cryptographic material (192), using an Internet Protocol (IP) address and a server certificate identified in the provisioning profile, and uploading said mobile app binary (181) to said AppStore (150) responsive to a successful verification of said cryptographic endpoint (187).

In full delegation mode, if the master secret (184) is present in the provisioning profile (182), it includes generating an app serial number (193), deriving a symmetric key (172) from said app serial number (193) and said master key (184), and injecting said app serial number and said symmetric key (172) in said mobile app binary (181). If the master secret (184) is not present in the provisioning profile (182), it includes generating a keypair and Certificate Signing Request (CSR), signing a certificate for a public key of said keypair with a generic market Certificate Authority (CA), and injecting said keypair and said certificate in said mobile app binary (181). A Common Name (CN) of said certificate contains said serial number and an app vendor name. In this delegation mode, if the wrapping key (180) is present in the provisioning profile (182), and if the master secret (184) in provisioning profile (182) is present it encrypts said symmetric key with said wrapping key (180). If the master secret (184) in provisioning profile (182) is not present, it encrypts a private key of said keypair with said wrapping key (180).

### Other Embodiments

In a third embodiment, a method for mobile application instantaneous secure communication is provided, for example, practiced or implemented by the mobile device 102. Responsive to a request for downloading a mobile app binary (181), the method includes the steps of receiving a diversified mobile app (190) injected with cryptographic material (192) by way of an application diversification process according to one of: i) a no delegation mode (300), ii) a partial delegation mode (320), and iii) a full delegation mode (340). Upon completion of said application diversification process, said diversified mobile app (190) uses said cryptographic material (192) to instantaneously establish a secure communication channel (197) for i) out-of-the-box provisioning and secure onboarding with an AppVendor (170) associated with said mobile app binary, or ii) licensing to consume said service from another platform other than that of said AppVendor hosting said mobile app binary.

In fourth embodiment, the mobile device 102 comprises a power supply (870) to provide power, a memory (820) to store instructions and data, a communication module (850) to transmit and receive data, a display (880) to present information and receive user input; and a processor (810) to run a computer program. The computer program comprises a non-transitory computer readable medium storing program code to be executed by at least one computer processing unit (CPU) in a computational environment, whereby execution of the program code causes the at least one CPU to perform operations of method described above.

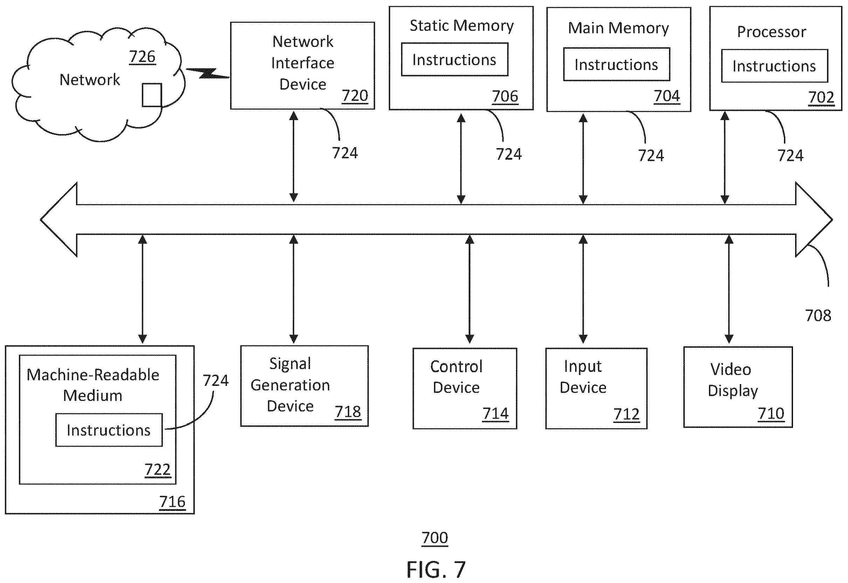

**FIG. 7** depicts an exemplary diagrammatic representation of a machine **700** in the form of a computer system **700** within which a set of instructions, when executed, may cause the machine to perform any one or more of the method steps discussed above As an example, the method steps in **300, 320** and **340** performed by either of AppStore **150** or CryptoProvider **160,** alone or in combination, can be practiced by the machine **700** implemented therein. In some embodiments, the machine may operate in part as a standalone device, such as a computer, laptop, or mobile device connected to a telecom network. In some embodiments, the machine may be connected (e.g., using the telecom network) to other machines. In a networked deployment, the machine may operate in the capacity of a server or a client user machine in serverclient user network environment, or as a peer machine in a peer-to-peer (or distributed) network environment.

The machine may comprise a server computer, a client user computer, a personal computer (PC), a tablet PC, a laptop computer, a desktop computer, a mobile device, a cell phone, a control system, a network router, switch or bridge, or any machine capable of executing a set of instructions (sequential or otherwise) that specify actions to be taken by that machine. It will be understood that a device of the present disclosure includes broadly any electronic device that provides voice, video or data communication. Further, while a single machine is illustrated, the term "machine" shall also be taken to include any collection of machines that individually or jointly execute a set (or multiple sets) of instructions to perform any one or more of the methodologies discussed herein.

The computer system 700 may include a processor 702 (e.g., a central processing unit (CPU), a graphics processing unit (GPU, or both), a main memory 704 and a static memory 706, which communicate with each other via a bus 708. The computer system 700 may further include a video display unit 710 (e.g., a liquid crystal display or LCD), a flat panel, a solid state display, or a cathode ray tube (CRT)). The computer system 700 may include an input device 712 (e.g., a keyboard, touchless sensing unit 110), a cursor control device 714 (e.g., a mouse, touchless sensing unit 110), a disk drive unit 716, a signal generation device 718 (e.g., a speaker or remote control) and a network interface device 720.

The disk drive unit 716 may include a machine-readable medium 722 on which is stored one or more sets of instructions (e.g., software 724) embodying any one or more of the methodologies or functions described herein, including those methods illustrated above. The instructions 724 may also reside, completely or at least partially, within the main memory 704, the static memory 706, and/or within the processor 702 during execution thereof by the computer system 700. The main memory 704 and the processor 702 also may constitute machine-readable media.

Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the present disclosure, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

While the machine-readable medium 722 is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present disclosure.

The term "machine-readable medium" shall accordingly be taken to include, but not be limited to: solid-state memories such as a memory card or other package that houses one or more read-only (non-volatile) memories, random access memories, or other re-writable (volatile) memories; magneto-optical or optical medium such as a disk or tape; and carrier wave signals such as a signal embodying computer instructions in a transmission medium; and/or a digital file attachment to e-mail or other self-contained information archive or set of archives is considered a distribution medium equivalent to a tangible storage medium. Accordingly, the disclosure is considered to include any one or more of a machine-readable medium or a distribution medium, as listed herein and including art-recognized equivalents and successor media, in which the software implementations herein are stored.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

### Further Definitions:

In the above-description of various embodiments of the present disclosure, aspects of the present disclosure may be illustrated and described herein in any of a number of patentable classes or contexts including any new and useful process, machine, manufacture, or composition of matter, or any new and useful improvement thereof. Accordingly, aspects of the present disclosure may be implemented in entirely hardware, entirely software (including firmware, resident software, micro-code, etc.) or combining software and hardware implementation that may all generally be referred to herein as a "circuit," "module," "component," or "system." Furthermore, aspects of the present disclosure may take the form of a computer program product comprising one or more computer readable media having computer readable program code embodied thereon.

Any combination of one or more computer readable media may be used. The computer readable media may be a computer readable signal medium or a computer readable storage medium. A computer readable storage medium may be, for example, but not limited to, an electronic, magnetic, optical, electromagnetic, or semiconductor system, apparatus, or device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device. Program code embodied on a computer readable signal medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Scala, Smalltalk, Scheme, Go, C++, C#, VB.NET, Python or the like, conventional procedural programming languages, such as the "C" programming language, Perl, PHP, dynamic programming languages such as Python, Ruby and Groovy, or other programming languages. The program code may execute entirely on the user's computer, partly on the user's computer, as a stand-alone software package, partly on the user's computer and partly on a remote computer, entirely on the remote computer or server, or within the Cloud or other computer network. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS), Backend as a Service (BaaS) for connecting mobile apps to cloud based services, and Security as a Service (SECaas).

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable instruction execution apparatus, create a mechanism for implementing the functions/acts specified in the flowchart and/or block diagram block or blocks.

These computer program instructions may also be stored in a computer readable medium that when executed can direct a computer, other programmable data processing apparatus, or other devices to function in a particular manner, such that the instructions when stored in the computer readable medium produce an article of manufacture including instructions which when executed, cause a computer to implement the function/act specified in the flowchart and/or block diagram block or blocks. The computer program instructions may also be loaded onto a computer, other programmable instruction execution apparatus, or other devices to cause a series of operational steps to be performed on the computer, other programmable apparatuses or other devices to produce a computer implemented process such that the instructions which execute on the computer or other programmable apparatus provide processes for implementing the functions/acts specified in the flowchart and/or block diagram block or blocks.

It is to be understood that the terminology used herein is for the purpose of describing particular embodiments only and is not intended to be limiting of the invention. Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

The flowchart and block diagrams in the figures illustrate the architecture, functionality, and operation of possible implementations of systems, methods, and computer program products according to various aspects of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The terminology used herein is for the purpose of describing particular aspects only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Like reference numbers signify like elements throughout the description of the figures.

The corresponding structures, materials, acts, and equivalents of any means or step plus function elements in the claims below are intended to include any disclosed structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The aspects of the disclosure herein were chosen and described in order to best explain the principles of the disclosure and the practical application, and to enable others of ordinary skill in the art to understand the disclosure with various modifications as are suited to the particular use contemplated.

## Claims

1. A method for mobile application instantaneous secure communication, the method comprising the steps of:
receiving a request to host a mobile app binary (181);
receiving a provisioning profile (182) indicating a delegation mode (185) for diversification of said mobile app binary (181);
responsive to a downloading of the mobile app binary (181), injecting cryptographic material (192) during an application diversification process of said mobile app binary (181) according to the delegation mode (185) whereby a diversified mobile app (190) is produced,
wherein upon completion of said application diversification process, said diversified mobile app (190) uses said cryptographic material (192) to differentiate an instance of said mobile app binary to a backend server, or accessed service, after said downloading, and instantaneously establish a secure communication channel (197) to said backend server or accessed service.

2. The method of claim 1, where upon establishing said secure communication channel (197) said diversified mobile app (190) provides for either of
i) out-of-the-box provisioning and secure onboarding with an AppVendor (170), and
ii) licensing to consume said service from another platform other than said AppVendor,
wherein said backend server or accessed service is a service requiring a proof of possession of said crypto material (192) that grants access of the diversified mobile app (190) to said service.

3. The method of claim 1, wherein the delegation mode (185) is selected from the group comprising:
i) a no delegation mode (300),
ii) a partial delegation mode (320), and
iii) a full delegation mode (340).

4. The method of claim 3, wherein said provisioning profile includes a secrets derivation model corresponding to said delegation mode, comprising one of:
i) an Internet Protocol (IP) address and server certificate (183) for said no delegation mode and said partial delegation mode, and
ii) a master secret (184) with an optional wrapping key (180) for said full delegation mode.

5. The method of claim 1, wherein said injecting is performed responsive to a deriving step, whereby cryptographic material (192) is derived according to said delegation mode, and is one of:
i) a secret (171) for no delegation mode;
ii) a derived symmetric key (172) for full delegation mode, and
iii) a keypair with accompanying certificate (173) for either partial delegation mode or full delegation mode.

6. The method of claim 4, further comprising preparation steps (141) for said no delegation mode and said partial delegation mode, of:
verifying a cryptographic endpoint (187) identified by said delegation mode (185) using said IP address and server certificate (183);
and if successful,
notifying said AppVendor (170) to upload said mobile binary app (181) to said AppStore (150); and thereafter,
associating the delegation mode (185) with said mobile app binary (181) hosted on said AppStore (150),
wherein said associating thereby commits AppStore to perform said application diversification process in accordance with said delegation mode (185).

7. The method of claim 4, wherein responsive to receiving a request for downloading said mobile app binary (181) hosted on AppStore (150), further comprising:
unpacking an application archive associated with said mobile app binary (181) ;
adding cryptographic material (192) according to said delegation mode within said application archive;
packing up said application archive to produce said diversified mobile app (190); and
resuming said downloading of said diversified mobile app (190),
wherein said steps of unpacking, adding, and packing correspond to said step of injecting.

8. A method for mobile application instantaneous secure communication, the method comprising the steps of:
notifying an AppStore (150) of a mobile app binary (181) hosted thereon;
providing a provisioning file (182) that includes provisioning info according to a delegation mode (185) for app diversification, thereby providing instructions for
injecting cryptographic material (192) during an application diversification process of said mobile app binary according to the delegation mode (185) responsive to a downloading of the mobile app binary (181), whereby a diversified mobile app is produced,
wherein upon completion of said application diversification process, said diversified mobile app (190) uses said cryptographic material (192) to differentiate an instance of said mobile app binary to a backend server, or accessed service, after said downloading, and instantaneously establish a secure communication channel (197) to said backend server or accessed service,
wherein the delegation mode (185) is one of: i) a no delegation mode (300), ii) a partial delegation mode (320), and iii) a full delegation mode (340).

9. The method of claim 9, where upon establishing said secure communication channel (197) said diversified mobile app provides for
i) out-of-the-box provisioning and secure onboarding with an AppVendor (170) providing said mobile app binary (181), or
ii) licensing to consume said service from another platform other than that of said AppVendor,
wherein said backend server or accessed service is a service requiring a proof of possession of said crypto material (192) that grants access of the diversified mobile app (190) to said service.

10. The method of claim 9, further comprising, for said no delegation mode and said partial delegation mode,
verifying a cryptographic endpoint (187) for providing said cryptographic material (192), using an Internet Protocol (IP) address and a server certificate identified in the provisioning profile, and
uploading said mobile app binary (181) to said AppStore (150) responsive to a successful verification of said cryptographic endpoint (187).

11. The method of claim 8, wherein for full delegation mode,
if master secret (184) in provisioning profile (182) is present: generating an app serial number (193), deriving a symmetric key (172) from said app serial number (193) and said master key (184), injecting said app serial number and said symmetric key (172) in said mobile app binary (181), and
if master secret (184) in provisioning profile (182) is not present:
generating a keypair and Code Signing Record (CSR), signing a certificate for a public key of said keypair with a generic market Certificate Authority (CA), and injecting said keypair and said certificate in said mobile app binary (181), wherein a Common Name (CN) of said certificate contains said serial number and an app vendor name.

12. The method of claim 11, further comprising
checking if a wrapping key (180) is present in the provisioning profile (182), and if so,
if master secret (184) in provisioning profile (182) is present:
encrypting said symmetric key with said wrapping key (180), and
if master secret (184) in provisioning profile (182) is not present:
encrypting a private key of said keypair with said wrapping key (180).

13. The method of claim 12, wherein responsive to receiving a request for downloading said mobile app binary (181) hosted on AppStore (150), further comprising:
unpacking an application archive associated with said mobile app binary (181) ;
adding cryptographic material (192) within said application archive according to said delegation mode;
packing up said application archive to produce said diversified mobile app (190); and
resuming said downloading of said diversified mobile app (190),
wherein said steps of unpacking, adding, and packing correspond to said step of injecting.

14. A method for mobile application instantaneous secure communication, comprising:
responsive to a request for downloading a mobile app binary (181),
receiving a diversified mobile app (190) injected with cryptographic material (192) by way of an application diversification process according to one of: i) a no delegation mode (300), ii) a partial delegation mode (320), and iii) a full delegation mode (340),
wherein upon completion of said application diversification process, said diversified mobile app (190) uses said cryptographic material (192) to instantaneously establish a secure communication channel (197) for
i) out-of-the-box provisioning and secure onboarding with an AppVendor (170) associated with said mobile app binary, or
ii) licensing to consume said service from another platform other than that of said AppVendor hosting said mobile app binary.

15. A mobile device for mobile application instantaneous secure communication, comprising:
a power supply (870) to provide power;
a memory (820) to store instructions and data;
a communication module (850) to transmit and receive data;
a display (880) to present information and receive user input; and
a processor (810) to run a computer program;
said computer program comprising a non-transitory computer readable medium storing program code to be executed by at least one computer processing unit (CPU) in a computational environment, whereby execution of the program code causes the at least one CPU to perform operations of method of claim 14.
